# EUROPÄISCHE PATENTANMELDUNG

(11) **EP 1 103 419 A1**
(43) Veröffentlichungstag der Anmeldung: **30.05.2001**
(21) Anmeldenummer: 99123362.8
(22) Anmeldetag: 23.11.1999
(51) Int. Cl.: B60R 1/06

(54) **Aussenspiegel für Kraftfahrzeuge**

(71) Anmelder: MEKRA Lang GmbH & Co. KG, 90765 Fürth (DE)
(72) Erfinder: Lang, Heinrich, 91465 Ergersheim (DE); Krzysanowski, Dirk, 91622 Rügland (DE)
(74) Vertreter: Winter, Brandl & Partner

(57) **Zusammenfassung**

Es wird ein Außenspiegel insbesondere für Kraftfahrzeuge bereitsgestellt, der mittels eines Schwenklagers (30) an dem Fahrzeug montiert ist. Um die Montage zu erleichtern umfaßt das Schwenklager (30) ein Distanzstück (60), das in einer Stellung in Richtung der Schwenkachse (31) verschiebbar ist und in der anderen Stellung nicht in Richtung der Schwenkachse verschiebbar ist. Hierdurch wird eine einfache Vormontage des Spiegels möglich. Vor der Montage wird das Distanzstück (60) nach unten geschoben, so daß der Spiegelhalter (32) zwischen dem oberen und dem unteren Halteausleger (10,12) positioniert werden kann. In dieser Lage wird das Distanzstück (60) nach oben gedrückt, so daß es in dem bzw. an dem Spiegelhalter (32) ein- bzw. angreift. In dieser Lage wird das Distanzstück (60) durch Verdrehen fixiert, wodurch der Spiegel vormontiert ist. Das Einführen der einer das Schwenklager (30) durchsetzenden Langschraube (68) ist folglich ohne weiteres "Einfädeln" möglich.

## Beschreibung

Die Erfindung betrifft einen Außenspiegel für Kraftfahrzeuge gemäß Anspruch 1.

Aus der EP 0 609 508 B1 ist eine verstellbare Rückspiegelanordnung für Kraftfahrzeuge bekannt. Der Verschwenkmechanismus dieser Rückspiegelanordung umfaßt eine Halteplatte auf der die Spiegeltrageplatte der Spiegelscheibe mittels Klemmsitz befestigt ist. Auf diese Weise ist eine einfache Montage und Demontage der Spiegelscheibe möglich.

Aus dem deutschen Gebrauchsmuster G 9308052.2 ist ein Außenspiegel für Nutzfahrzeuge bekannt. Dieser bekannte Außenspiegel umfaßt ein Gehäuse, eine Trägerplatte, einen Verschwenkmechanismus, wenigstens eine Spiegelscheibe, die auf einer Spiegeltragplatte montiert ist, und zwei Halteausleger, die über einen Spiegelhalter mit dem Fahrzeug verbunden sind. Die beiden Halteausleger sind einstückig an die Trägerplatte angeformt. Die Verbindung zwischen Halteauslegern und Spiegelhalter ist eine Schwenklagerverbindung. Der Spiegelhalter weist eine Schenkachsenbohrung auf, die mit einer oberen und einer unteren Achsaufnahme an den fahrzeugseitigen Enden der beiden Halteausleger fluchtet. Durch eine Langschraube, die die untere Achsaufnahme und die Schwenkachsenbohrung durchdringt und in die obere Achsaufnahme eingeschraubt ist wird der Spiegel zusammengehalten und in einer bestimmten Winkelstellung fixiert. Die Montage des eigentlichen Speigels an dem Spiegelhalter ist nicht ganz einfach, da die beiden Teile so zueinander gehalten werden müssen, daß die Achsaufnahmen und die Schwenkachsenbohrung zueinander fluchten bis die Langschraube eingeschraubt ist.

Aufgabe der vorliegenden Erfindung ist es einen Außenspiegel für Kraftfahrzeuge bereit zu stellen, der besonders montagefreundlich ist.

Die Lösung dieser Aufgabe erfolgt durch die Merkmale des Anspruchs 1.

Durch das Vorsehen eines Distanzstückes in dem Schwenklager mit einer Stellung in der es in Richtung der Schenkachse verschiebbar ist und einer Stellung in der es nicht in Richtung der Schwenkachse verschiebbar ist, ist eine einfache Vormantage des Spiegels am Fahrzeug möglich. Vor der Montage wird das Distanzstück nach unten geschoben, so daß der Spiegelhalter zwischen dem oberen und dem unteren Halteauslegern positioniert werden kann. In dieser Lage wird das Distanzstück nach oben gedrückt, so daß es in bzw. an dem Spiegelhalter ein- bzw. angreift. In dieser Lage wird das Distanzstück durch verdrehen fixiert, wodurch der Spiegel vormontiert ist. Das Einführen der einer das Schwenklager durchsetzenden Langschraube ist folglich ohne weiteres "Einfädeln" möglich.

Die Unteransprüche beziehen sich auf vorteilhafte Ausgestaltungen der Erfindung.

Weitere Einzelheiten, Merkmale und Vorteile der Erfindung ergeben sich aus einer beispielhaften Ausführungsform anhand der Zeichnung.

Es zeigt:
Fig. 1a und 1b eine Explosionsdarstellung einer beispielhaften Ausführungsform der Erfindung;
Fig. 2 den Spiegel nach Fig. 1a und 1b in zusammengebautem Zustand;
Fig. 3 eine Schnittdarstellung entlang der Linie A-A in Fig 1 bzw 2;
Fig. 4 die Anordnung des Blendringes auf der unteren Achsaufnahme; und
Fig. 5a und 5b Details der Montage des Spiegelkopfes an dem Spiegelhalter.

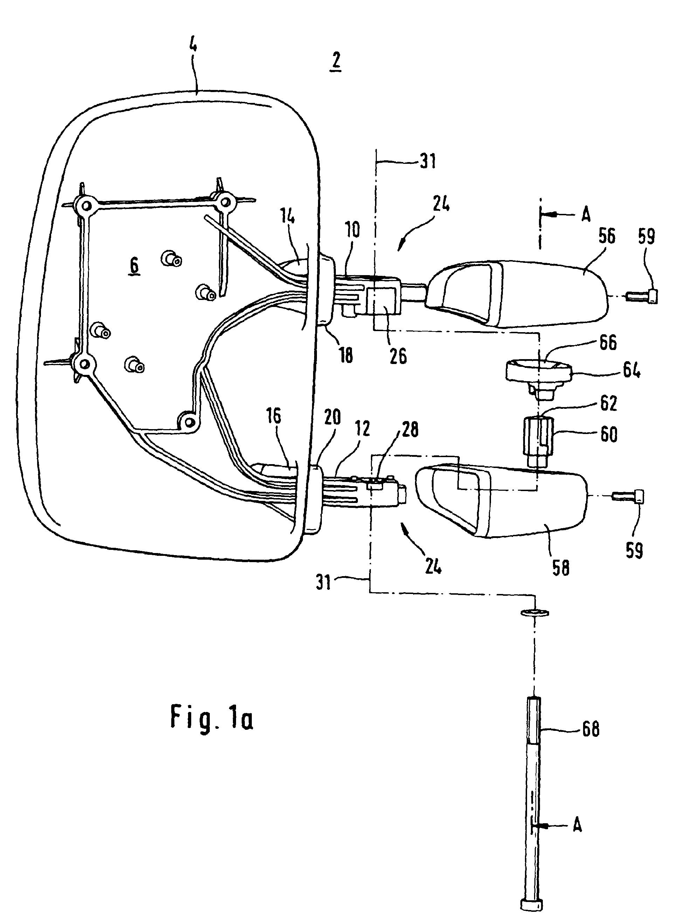

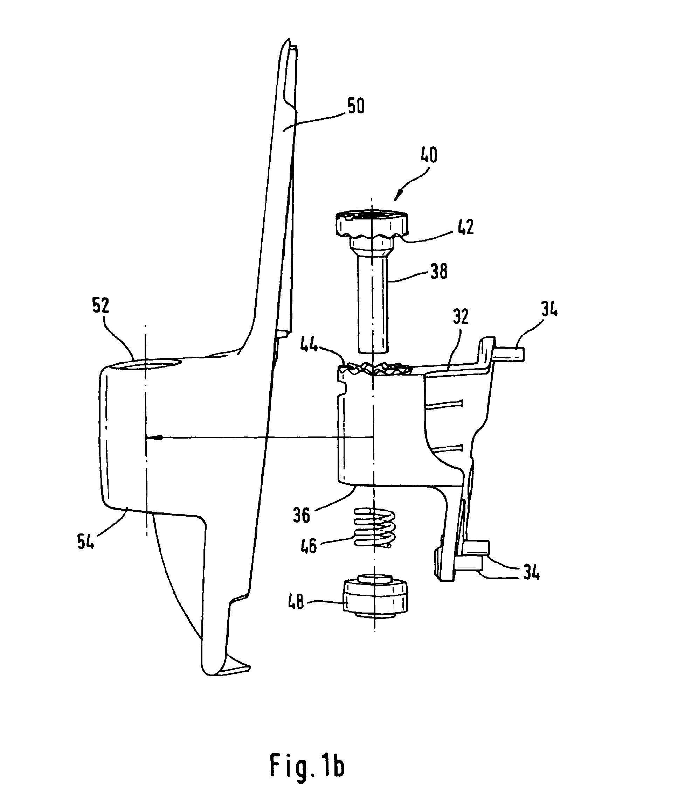

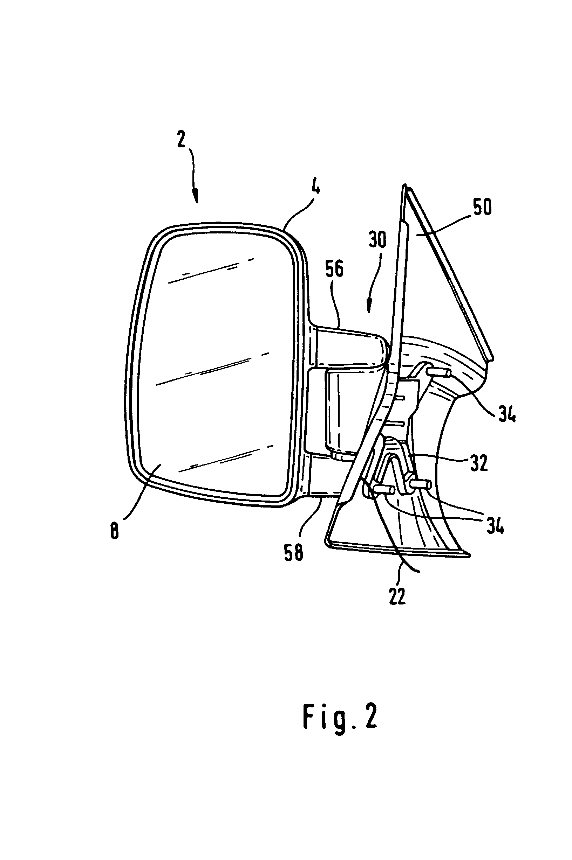

Der Außenspiegel nach Figur 1 und 2 umfaßt einen Spiegelkopf 2. Der Spiegelkopf 2 umfaßt ein Gehäuse 4, eine in dem Gehäuse 4 angeordnete Trägerplatte 6 und eine an der Trägerplatte verschenkbar montierte Spiegelanordnung 8. Hinsichtlich Details der Spiegelanordnung wird auf die EP 0 609 508 B1 verwiesen.

An der Trägerplatte 6 ist das Gehäuse 4 befestigt. Von der Trägerplatte 6 erstrecken sich im Abstand voneinander ein oberer und ein unterer Halteausleger 10 und 12 weg. Die beiden Halteausleger 10 und 12 erstrecken sich im wesentlichen parallel zueinander und sind einstückig an die Trägerplatte 6 angeformt. Die beiden Halteausleger 10 und 12 erstrecken sich durch einen oberen und einen unteren Durchbruch 14 und 16, die seitlich in dem Gehäuse 4 vorgesehen sind. An den oberen bzw. unteren Durchbruch 14 und 16 ist jeweils ein oberer bzw. unterer Aufsatz 18 und 20 einstückig an das Gehäuse 4 angeformt. Durch den unteren Durchbruch 16 ist auch ein Kabel 22 geführt, daß die elektrische Verbindung zu nicht näher dargestellten elektrischen Komponenten der Spiegelanordnung 8 herstellt.

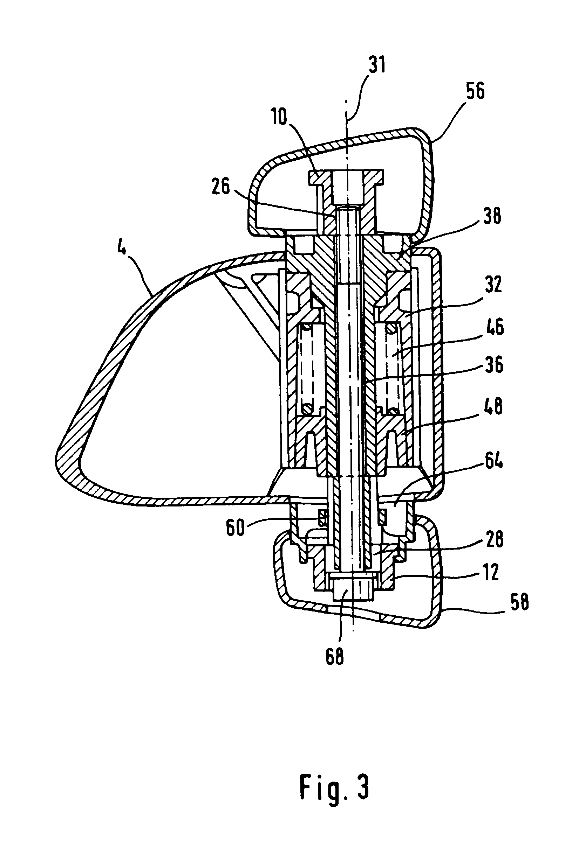

Die beiden Halteausleger 10 und 12 weisen an ihrem fahrzeugseitigen Ende 24 jeweils eine obere und eine untere Achsaufnahme in Form einer Gewindebohrung 26 im oberen Halteausleger 10 und in Form einer Bohrung 28 im unteren Halteausleger 12 auf. Die beiden Halteausleger 10 und 12 sind an ihrem fahrzeugseitigen Ende 24 in Form eines Schwenklagers 30, das um eine Schwenkachse 31 schwenkt, mit einem Spiegelhalter 32 verbunden. Der Spiegelhalter 32 läßt sich mittels Schraublöcher 34 an einem nicht näher dargestellten Fahrzeug befestigen. Der Spiegelhalter 32 wird von einer Schwenkachsendurchführung 36 durchsetzt, die mit der oberen und unteren Achsaufnahme 26 und 28 und der Schwenkachse 31 fluchtet. Das Schwenklager 30 umfaßt eine obere Achshülse 38 die sich von oben her in die Schwenkachsendurchführung 36 in dem Spiegelhalter 32 einschieben läßt. Die obere Achshülse 38 weist ein oben verbreitertes Ende 40 auf. Das obere Ende 40 der oberen Achshülse 38 weist auf der dem Spiegelhalter 32 zugewandten Seite ringförmig umlaufende erste Rasterelemente 42 auf. Diese ersten Rasterelemente 42 greifen in dazu passende zweite Rasterelemente 44 ein, die ringförmig auf der Oberseite des Spiegelhalters 32 angeordnet sind. Von unten wird in den Spiegelhalter 32 eine Spiralfeder 46 und eine unter Achshülse 48 eingefügt. Der Spiegelhalter 32 wird in am Fahrzeug montiertem Zustand (siehe Fig. 3) durch eine Spiegelhalterabdeckung 50 verdeckt, die eine obere und eine untere Öffnung 52 und 54 aufweist, die in montiertem Zustand mit der Schwenkachse 31 fluchten.

Vor der endgültigen Montage wird über dem oberen Halteausleger 10 noch eine obere Abdeckung 56 geschoben und auf dem oberen Aufsatz 18 des oberen Durchbruchs 14 in dem Gehäuse 4 aufgesetzt. In gleicher Weise wird auf den unteren Halteausleger 12 eine untere Abdeckung 58 aufgeschoben und auf dem unteren Aufsatz 20 aufgesetzt. Der obere und untere Aufsatz 18 und 20 und die beiden Abdeckungen 56 und 58 sind so ausgebildet, daß die beiden Abdeckungen 56 und 58 und das Gehäuse 4 flüssigkeitsdicht miteinander verbunden sind. Nachdem der Spiegelhalter 32 an dem nicht näher dargestellten Fahrzeug befestigt ist, wird er durch die Spiegelhalterabdeckung 50 abgedeckt.

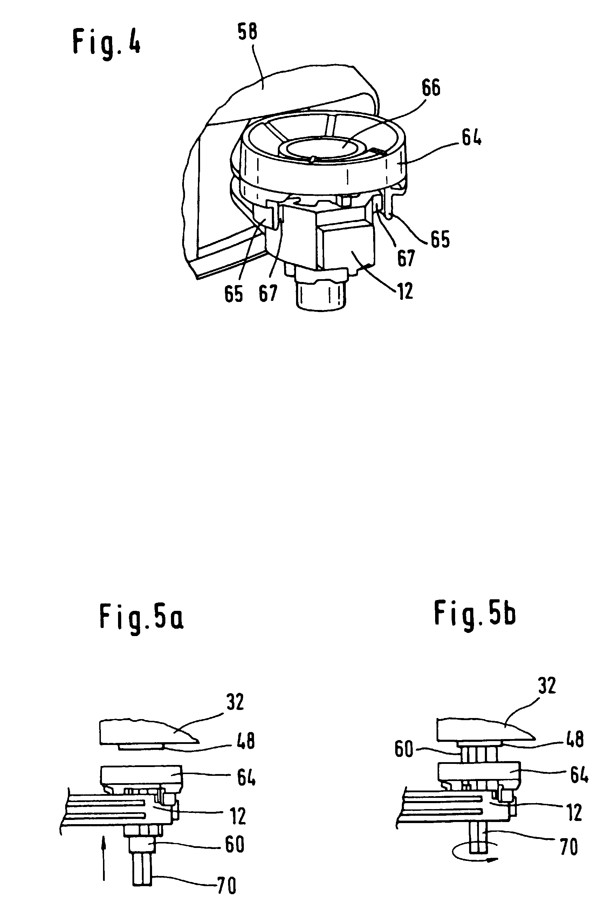

Wie aus Fig. 1a zu ersehen ist, wird in die untere Achsaufnahme 28 von oben her ein Distanzstück 60 eingesetzt, das eine zentrale Bohrung 62 aufweist, die mit der Schwenkachse 31 fluchtet. Wie aus Fig. 4 zu ersehen ist, wird auf die Achsaufnahme 28 des unteren Haltearms 12 ein Blendring 64 aufgesetzt, der eine zentrale Öffnung 66 aufweist. Der Blendring 64 weist Laschen 65 auf, die an Vorsprüngen 67 an dem unteren Haltearm 12 einrasten.

In zusammengebautem Zustand werden Spiegelkopf 2 und Spiegelhalter 32 durch eine Langschraube 68 zusammenghalten. Wie aus Fig. 3 zu ersehen ist, durchsetzt die Langschraube 68 der Reihe nach die Bohrung 28 in dem unteren Haltearm 12, das Distanzstück 60, den Blendring 64, den Spiegelhalter 32 bzw. die Schwenkachsenbohrung 36 mit unterer Achshülse 48, Spiralfeder 46 und oberer Achshülse 38 und wird in die Gewindebohrung 26 des oberen Haltearms 10 eingeschraubt.

Bei der Montage wird der Spiegelkopf 2 mit den beiden Halteauslegern 10 und 12 so an dem Spiegelhalter 32 bzw. dem Schwenklager 30 angeordnet, daß die Gewindebohrung 26 in dem oberen Halteausleger 10 und die Bohrung 28 in den unteren Halteausleger 12 mit den beiden im Spiegelhalter 32 angeordneten Achshülsen 38 und 48 fluchten. Das obere Ende 40 der oberen Achshülse 38 greift formschlüssig in die obere Achsaufnahme 26 ein. Mittels eines Sechskantschlüssels 70 - siehe Fig. 5a und 5b - wird das Distanzelement 60 nach oben durch die Öffnung 66 des Blendrings 64 in die untere Achshülse 48 gedrückt und verdreht, so daß das Distanzstück 60 nicht mehr in Achsrichtung verschiebbar ist. Hierdurch wird der Spiegelkopf 2 an dem Spiegelhalter 32 fixiert. Durch diese Vormontage kann die Langschraube 68 ohne Probleme von unten her durch die untere Achsaufnahme 28 eingeführt und mit der Gewindebohrung 26 der oberen Achsaufnahme verschraubt werden.

Die Spiegelanordnung 8 kann beispielsweise mit einem elektromotorischen Antrieb ausgerüstet sein. Alternativ läßt sich auch ein von Hand betätigbarer Verstellmechanismus verwenden, wie er beispielsweise aus G 930852.2 bekannt ist.

### Bezugszeichenliste

- 2: Spiegelkopf
- 4: Gehäuse
- 6: Trägerplatte
- 8: Spiegelanordnung
- 10: oberer Halteausleger
- 12: unterer Halteausleger
- 14: oberer Durchbruch
- 16: unterer Durchbruch
- 18: oberer Aufsatz auf 14
- 20: unterer Aufsatz auf 16
- 22: Kabel
- 24: fahrzeugseitiges Ende der Halteausleger
- 26: obere Achsaufnahme, Gewindebohrung
- 28: untere Achsaufnahme, Bohrung
- 30: Schwenklager
- 31: Schwenkachse
- 32: Spiegelhalter
- 34: Schraublöcher in 32
- 36: Schwenkachsendurchführung in 32
- 38: obere Achshülse
- 40: verbreitertes, oberes Ende von 52
- 42: erste Rasterelemente
- 44: zweite Rasterelemente
- 46: Spiralfeder
- 48: untere Achshülse
- 50: Spiegelhalterabdeckung
- 52: obere Öffnung in 50
- 54: untere Öffnung in 50
- 56: obere Abdeckung, Abdeckung von 10
- 58: unter Abdeckung, Abdeckung von 12
- 59: Schrauben
- 60: Distanzstück
- 62: Bohrung in 60
- 64: Blendring
- 65: Laschen an 64
- 66: Öffnung in 64
- 67: Vorsprünge an 12
- 68: Langschraube
- 70: Sechskantschlüssel

## Patentansprüche

1. Außenspiegel für Kraftfahrzeuge mit einem Gehäuse (2),
einer in dem Gehäuse (2) angeordneten Trägerplatte (6),
einem an der Trägerplate (6) befestigten Spiegelanordnung (8),
zwei im Abstand zueinander sich seitlich aus dem Gehäuse (4) wegerstreckende Halteausleger (10, 12), die einstückig an die Trägerplatte (6) angeformt sind,
einem Schwenklager (30), das eine obere und eine untere Achsaufnahme (26, 28) an den fahrzeugseitigen Enden (24) der beiden Halteausleger (10, 12), einen Spiegelhalter (32) zum Befestigen des Außenspiegels an einem Fahrzeug, und eine Langschraube (68) umfaßt, die sich durch den Spiegelhalter (32) und die obere und die untere Achsaufnahme (26, 28) erstreckt, **dadurch gekennzeichnet,**
daß das Schwenklager (30) ein Distanzstück (60) umfaßt, das in einer der beiden Achsaufnahmen (26, 28) angeordnet ist,
daß das Distanzstück (60) eine erste Stellung aufweist, in der das Distanzstück (60) in Richtung der Langschraube (68) verschiebar ist, und
daß das Distanzstück (60) eine zweite Stellung aufweist in der es in den Spiegelhalter (32) hineinragt und durch Drehung fixierbar ist.

2. Außenspiegel nach Anspruch 1, dadurch gekennzeichnet, daß der Spiegelhalter (32) eine untere Achshülse (48) umfaßt, die in den Spiegelhalter (32) einsteckbar ist, und in der das Distanzstück (60) in der zweiten Stellung eingreift.

3. Außenspiegel nach Anspruch 1 oder 2, dadurch gekennzeichnet, daß der Spiegelhalter (32) eine obere Achshülse (38) umfaßt, die in den Spiegelhalter (32) einsteckbar ist und deren aus dem Spiegelhalter (32) herausragendes Ende (40) in die obere Achsaufnahme (26) eingreift.

4. Außenspiegel nach Anspruch 3, dadurch gekennzeichnet, daß die obere Achshülse (38) in ihrem oberen Bereich ringförmig umlaufende erste Rasterelemente (42) aufweist, die zu entsprechend komplementär ausgebildeten zweiten Rasterelementen (44) passen, die auf der Oberseite des Spiegelhalters (32) ausgebildet sind.

5. Außenspiegel nach Anspruch 4, gekennzeichnet durch ein Spiralfederelement (46), das zwischen oberer und unterer Achshülse (38, 48) im Spiegelhalter (32) angeordnet ist.

6. Außenspiegel nach einem der vorhergehenden Ansprüche, gekennzeichnet durch einen Blendring (64), der am fahreugseitigen Ende (24) des unteren Haltearms (12) in den Raum zwischen den beiden Halteauslegern (10, 12) hineinragend montierbar ist.

7. Außenspiegel nach einem der vorhergehenden Ansprüche, dadurch gekennzeichnet, daß die beiden Halteausleger (10, 12) jeweils mit einer Abdeckung (56, 58) versehen sind, die an dem Gehäuse (4) aufsteckbar sind.

8. Außenspiegel nach Anspruch 7, dadurch gekennzeichnet, daß das Gehäuse (4) wenigstens einen Durchbruch (14, 16) aufweist, durch die die beiden Halteausleger (10, 12) hindurchragen, und daß an dem wenigstens einen Durchbruch (14, 16) ein Aufsatzteil (18, 20) angeformt ist, auf das die Halteauslegerabdeckungen (56, 58) aufsteckbar sind.

9. Außenspiegel nach einem der vorhergehenden Ansprüche, 7 bis 8, dadurch gekennzeichnet, daß die Abdeckung (56) des oberen Halteauslegers (10) den Spiegelhalter (32) und die oberen Achshülse (38) übergreift, und daß die obere Abdeckung (56) im Bereich über der oberen Achshülse (38) geschlossen ist.

10. Außenspiegel nach einem der vorhergehenden Ansprüche 7 bis 9, dadurch gekennzeichnet, daß die Abdeckung (58) des unteren Halteauslegers (12) den Spiegelhalter (32) übergreift.
